# EUROPÄISCHE PATENTSCHRIFT

(11) **EP 1 255 096 B1**
(45) Veröffentlichungstag und Bekanntmachung des Hinweises auf die Patenterteilung: **15.12.2004**
(21) Anmeldenummer: 01102357.9
(22) Anmeldetag: 02.02.2001
(51) Int. Cl.: G01J 3/12, G01J 3/18

(54) **Monochromator und optischer Spektrumanalysator mit mehreren Messpfaden**
Monochromator and optical spectrum analyzer with multiple paths
Monochromateur et analyseur optique de spectres à voies multiples

(43) Veröffentlichungstag der Anmeldung: 06.11.2002
(73) Patentinhaber: Acterna Germany GmbH, 72800 Eningen (DE)
(72) Erfinder: Fuhrmann, Thomas, Dr.-Ing., 72800 Eningen (DE)
(74) Vertreter: Kohler Schmid Möbus

(56) Entgegenhaltungen:
- EP-A- 0 540 966
- WO-A-00/40935
- DE-A- 19 836 595
- US-A- 2 922 331
- PATENT ABSTRACTS OF JAPAN vol. 1996, no. 10, 31. Oktober 1996 (1996-10-31) & JP 08 145795 A (ANRITSU CORP), 7. Juni 1996 (1996-06-07)
- PATENT ABSTRACTS OF JAPAN vol. 018, no. 624 (P-1833), 28. November 1994 (1994-11-28) & JP 06 241897 A (MITSUBISHI HEAVY IND LTD), 2. September 1994 (1994-09-02)
- PATENT ABSTRACTS OF JAPAN vol. 015, no. 037 (P-1159), 29. Januar 1991 (1991-01-29) & JP 02 275326 A (KURARAY CO LTD), 9. November 1990 (1990-11-09)

## Beschreibung

Die Erfindung betrifft einen Monochromator, insbesondere einen Doppelmonochromator, mit mehreren Eingangsaperturen zum Einkoppeln mehrerer Lichtstrahlen, mit einer Kollimatoroptik zur Erzeugung paralleler Lichtstrahlen aus den von den Eingangsaperturen ausgehenden divergenten Lichtstrahlen, mit einer Dispersionseinrichtung, vorzugsweise Beugungsgitter, zum Dispergieren der auftreffenden parallelen Lichtstrahlen entlang einer Dispersionsrichtung und mit einer Fokussieroptik zum Fokussieren der dispergierten Lichtstrahlen, wobei die Eingangsaperturen senkrecht zur Dispersionsrichtung der Lichtstrahlen zueinander versetzt sind und die eingekoppelten Lichtstrahlen unabhängig voneinander den Monochromator durchlaufen, sowie einen optischen Spektrumanalysator mit einem solchen Monochromator.

Ein derartiger Monochromator ist beispielsweise durch JP 06 241 897 bekannt geworden.

Aus JP 06 241 897 ist ein Spektrometer bekannt, mit dem vollflächig Farben eines bewegten Gegenstandes automatisch und genau untersucht werden können. Das Spektrometer hat mehrere Linsen, mehrere Schlitze, einen ersten konkaven Spiegel, der jeweils die durch die Schlitze eintretenden Lichtstrahlen reflektiert, ein Beugungsgitter, an dem die reflektierten Lichtstrahlen gebeugt werden, einen zweiten konkaven Spiegel, der die gebeugten Lichtstrahlen reflektiert, einen zweidimensionalen Sensor, der die reflektierten gebeugten Lichtstrahlen detektiert, und einen Prozessor zum Verarbeiten der Sensorsignale.

Weiterhin ist aus JP 08 145 795 ein Farbmeßgerät mit einer Eingangsapertur, einem Kollimator, einem Beugungsgitter und einem Spiegel bekannt. Die durch die Eingangsapertur einfallenden Lichtstrahlen werden am Kollimator in parallele Lichtstrahlen transformiert, die am Beugungsgitter gebeugt und dann am Spiegel reklektiert werden. Die reflektierten Lichtstrahlen werden wieder am Beugungsgitter gebeugt und vom Kollimator auf einen Ausgangsschlitz zur Wellenlängenselektion abgebildet.

Bei optischen Spektrumanalysatoren, wie sie z.B. durch die EP 0 540 966 B1 oder EP 1 031 825 A1 bekannt geworden sind, ist jeweils nur ein Meßpfad vorhanden, so daß zu einem Zeitpunkt jeweils nur ein optisches Spektrum aufgenommen werden kann. Mehrere Spektren müssen zeitlich nacheinander aufgenommen werden, z.B. indem die einzelnen Spektren mittels eines optischen Schalters nacheinander dem einen Meßpfad zugeführt werden. Daher muß auch bei der Kalibrierung der absoluten Wellenlänge zwischen einem Kalibrierspektrum und dem Meßspektrum umgeschaltet werden, wodurch sich für den Benutzer Meßunterbrechungen ergeben. Da zwischen zwei Wellenlängenkalibrierungen im allgemeinen erhebliche Zeitintervalle (Minuten bis Stunden) liegen, nimmt die Wellenlängenungenauigkeit mit der Zeit zu. Dies ist besonders dann der Fall, wenn sich während der Messung die Umgebungsbedingungen (z.B. Temperatur) ändern und keine augenblickliche Neukalibrierung stattfindet.

Es ist daher die Aufgabe der Erfindung, einen Monochromator bzw. einen optischen Spektrumanalysator bereitzustellen, mit dem mehrere optische Spektren gleichzeitig gemessen werden können.

Diese Aufgabe wird erfindungsgemäß dadurch gelöst, dass mehrere Aperturen zur Wellenlängenselektion senkrecht zur Dispersionsrichtung der Lichtstrahlen zueinander versetzt sind,dass jeder durch eine Eingangsapertur eingekoppelte Lichtstrahl durch genau eine Apertur zur Wellenlängenselektion geht und dass die Lichtstrahlen zweier benachbarter Meßpfade den Monochromator antiparallel zueinander durchlaufen.

Aufgrund von Streulicht und Fehlern im Lichtpfad wird ein Übersprechen zwischen den Meßpfaden stattfinden. Dieses Übersprechen ist störend, da Licht von einem Meßpfad in einen anderen Meßpfad eingekoppelt wird und dadurch z.B. die Messung des optischen Spektrums eines optischen Übertragungssystems verfälscht wird. Das optische Übersprechen ist erfindungsgemäß signifikant reduziert, da die Lichtstrahlen zweier benachbarter Meßpfade den Monochromator antiparallel zueinander durchlaufen.

Bei einem Einfach-Monochromator bilden die Aperturen zur Wellenlängenselektion die Ausgangsaperturen des Monochromators, aus denen das Licht aus dem Monochromator austritt.

Bei einem Doppel- bzw. Mehrfach-Monochromator sind für das aus den Aperturen zur Wellenlängenselektion austretende Licht eine zweite Kollimatoroptik, eine zweite Dispersionseinrichtung, vorzugsweise Beugungsgitter, eine zweite Fokussieroptik und mehrere Ausgangsaperturen vorgesehen, wobei die Eingangs- und Ausgangsaperturen senkrecht zur Dispersionsrichtung der Lichtstrahlen zueinander versetzt sind, jeder durch eine Eingangsapertur eingekoppelte Lichtstrahl durch genau eine Ausgangsapertur geht und die eingekoppelten Lichtstrahlen unabhängig voneinander den Monochromator durchlaufen.

Erfindungsgemäß sind die Abstände der einzelnen Eingangsaperturen senkrecht zur Dispersionsrichtung, ihre Schlitzbreite, die Brennweiten von Kollimator- und Fokussieroptiken sowie die Abstände der einzelnen Komponenten des Monochromators zueinander so gewählt, daß in der Bildebene der Aperturen zur Wellenlängenselektion bzw. der Ausgangsaperturen die Spektralanteile der einzelnen Lichtstrahlen räumlich vollständig voneinander getrennt sind. Die zu messenden Spektren der einzelnen Lichtstrahlen können dann ohne gegenseitige Überlagerung gemessen werden.

Bei einem subtraktiven Doppelmonochromator sind die Dispersionsrichtungen der an der ersten und an der zweiten Dispersionseinrichtungen dispergierten Lichtstrahlen einander entgegengesetzt, so daß alle Spektralanteile eines Lichtsstrahls an der Ausgangsapertur wieder auf einen Punkt treffen. Die Apertur in der Zwischenbildebene bewirkt die Wellenlängenselektion, die Ausgangsapertur bewirkt eine weitere Streulichtunterdrückung.

Bei einem additiven Doppelmonochromator sind die Dispersionsrichtungen der an der ersten und an der zweiten Dispersionseinrichtungen dispergierten Lichtstrahlen gleichgerichtet. Dann werden an der zweiten Dispersionseinrichtung die Spektralanteile eines Lichtstrahls räumlich noch weiter aufgespalten, so daß die Ausgangsapertur als weiteres wellenlängenselektives Element wirkt.

Wenn in einzelnen Anwendungsfällen die Auflösung und Streulichtunterdrückung eines Doppelmonochromators nicht ausreicht, können erfindungsgemäß ein oder mehrere weitere Monochromatoren in Serie geschaltet werden.

Bei geeigneter Strahlführung können die beiden Dispersionseinrichtungen durch eine einzige Dispersionseinrichtung (d.h. physikalisch als ein Bauteil) und/oder die erste und zweite Kollimatoroptik durch eine einzige Optik (d.h. physikalisch als ein Bauteil) und/oder die erste und zweite Fokussieroptik durch eine einzige Fokussieroptik (d.h. physikalisch als ein Bauteil) und/oder die erste Kollimatoroptik und die erste Fokussieroptik und/oder die zweite Kollimatoroptik und die zweite Fokussieroptik durch eine einzige Optik (d.h. physikalisch als ein Bauteil) gebildet sein. Weiterhin können die erste Kollimatoroptik, die erste Dispersionseinrichtung und die erste Fokussieroptik und/oder die zweite Kollimatoroptik, die zweite Dispersionseinrichtung und die zweite Fokussieroptik durch ein einziges konkaves Dispersionsgitter gebildet sein.

Bei bevorzugten Ausführungsformen des erfindungsgemäßen Doppelmonochromators ist zwischen den beiden Dispersionseinrichtungen eine Einrichtung, z.B. eine Lambda/2-Verzögerungsplatte vorgesehen, welche die Polarisation des Lichts so ändert, daß die Einfügedämpfung des Doppelmonochromators nahezu unabhängig von der Polarisationsrichtung wird.

Vorzugsweise ist neben jeder Eingangsapertur des Monochromators jeweils ihre zugeordnete Ausgangsapertur oder jeweils die Ausgangsapertur des benachbarten Meßpfads angeordnet.

Die Erfindung betrifft auch einen optischen Spektrumanalysator mit mehreren parallelen Meßpfaden und mit einem Monochromator, wie er oben beschrieben ist, wobei jedem Meßpfad jeweils eine Eingangs- und Ausgangsapertur des Monochromators zugeordnet ist. Dabei ist vorzugsweise an jeder Eingangsapertur ein Lichtwellenleiter angeschlossen und jeder Ausgangsapertur ein Photodetektor des optischen Spektrumanalysators zugeordnet. Besonders bevorzugt erfolgt die Messung der einzelnen Meßpfade gleichzeitig.

Bei besonders bevorzugten Ausführungsformen des erfindungsgemäßen optischen Spektrumanalysators ist mindestens ein Meßpfad an eine Referenzlichtquelle angeschlossen. Gleichzeitig zur Messung von zu untersuchenden Spektren kann das Referenzspektrum, welches charakteristische Extremwerte bei genau bekannten Wellenlängen hat, gemessen und so die absolute Wellenlänge des optischen Spektrumanalysators kalibriert werden. Beispielsweise kann das Referenzspektrum durch einen Laser mit genau bekannter und sehr gut stabilisierter Wellenlänge oder durch eine breitbandige Lichtquelle mit einem nachgeschalteten, wellenlängenselektiven Element, z.B. einem bei genau bekannten Wellenlängen absorbierenden Gas oder einem Fabry-Perot-Interferometer, erzeugt werden.

Die Wellenlängenkalibrierung des optischen Spektrumanalysators kann mit der gleichen Beugungsordnung wie das Beugungsgitter erfolgen, wobei dann das Referenzspektrum im gleichen Wellenlängenbereich wie der Meßbereich des optischen Spektrumanalysators ist. Dies hat im Wellenlängenbereich um 1550 nm den Vorteil, daß dort viele optische Komponenten und unterschiedliche Konzepte zur Wellenlängenkalibrierung zur Verfügung stehen. Alternativ kann das Beugungsgitter im Referenzpfad bei einer anderen Beugungsordnung genutzt werden.

Aus den elektrischen Signalen der Photodetektoren werden in einer Auswerte- und Steuereinrichtung die zu messenden Spektren ermittelt, die auch eine Stelleinrichtung zum Verstellen der Dispersionseinrichtung bzw. Dispersionseinrichtungen ansteuert. Die Wellenlängenkalibrierung kann während der Messung in der Auswerte- und Steuereinrichtung erfolgen, um so die Wellenlänge des gemessenen Spektrums zu korrigieren.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: in einem Blockschaltbild die wesentlichen Komponenten eines erfindungsgemäßen Doppelmonochromators;
- Fig. 2: in einem Blockschaltbild die wesentlichen Komponenten eines erfindungsgemäßen optischen Spektrumanalysators; und
- Fig. 3: schematisch den Strahlengang von Lichtstrahlen zweier benachbarter Meßpfade durch einen erfindungsgemäßen Monochromator bei paralleler Strahlführung (Fig. 3a) und bei antiparalleler Strahlführung (Fig. 3b).

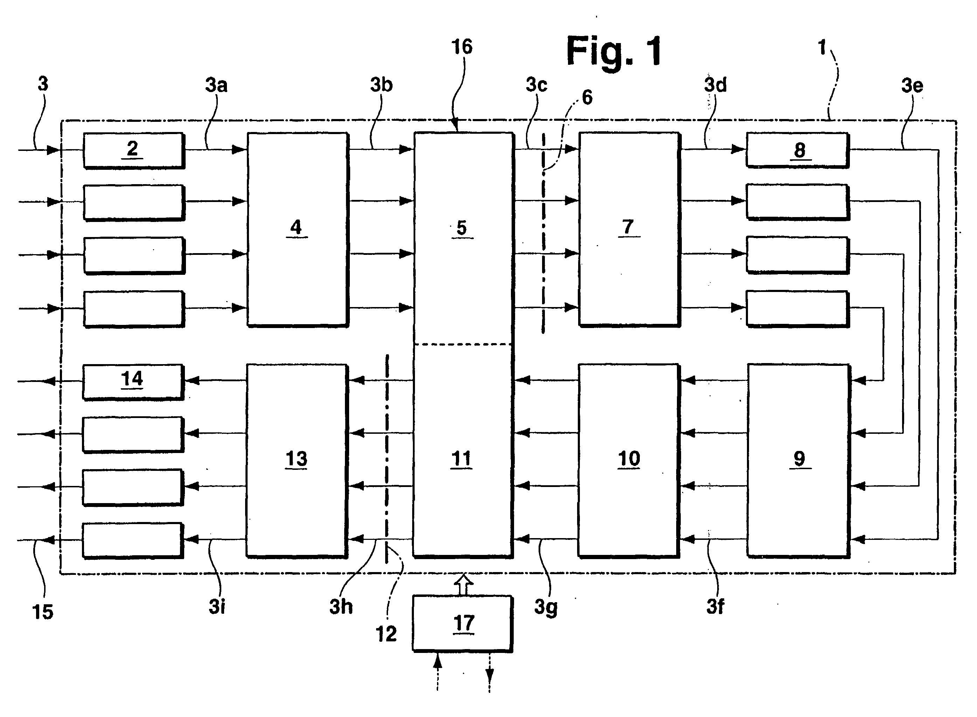

Der in **Fig. 1** insgesamt mit **1** bezeichnete Monochromator ist ein Doppelmonochromator und weist mehrere, in einer Reihe nebeneinander liegende Eingangsaperturen **2** zum Einkoppeln mehrerer Lichtstrahlen **3** auf. Diese Eingangsaperturen 2 können beispielsweise jeweils durch die Austrittsflächen von parallel zueinander ausgerichteten Singlemode-Fasern gebildet sein, in denen die einzelnen Lichtstrahlen 3 zum Monochromator 1 geführt werden. Der Strahlengang der im gezeigten Ausführungsbeispiel vier Lichtstrahlen 3 ist jeweils mit Pfeilen dargestellt. Mit einer ersten Kollimatoroptik (z.B. Linse oder Spiegel) **4** werden aus den von den Eingangsaperturen **2** ausgehenden divergenten Lichtstrahlen **3a** jeweils parallele Lichtstrahlen **3b** erzeugt, die auf ein erstes drehbares Beugungsgitter **5** abgebildet werden. Die am Beugungsgitter **5** entlang einer Dispersionsrichtung **6** dispergierten Lichtstrahlen **3c** werden durch eine erste Fokussieroptik **7** (z.B. Linse oder Spiegel) fokussiert und in einer Zwischenbildebene jeweils auf eine Apertur **8** zur Wellenlängenselektion abgebildet, um einen ausgewählten Spektralanteil des jeweiligen fokussierten Lichtstrahls **3d** durchzulassen.

Die Polarisationsrichtung der nun wellenlängenselektierten Lichtstrahlen **3e** wird mittels einer Polarisationseinrichtung **9** (z.B. Lambda/2-Verzögerungsplatte) um 90° gedreht. Mit einer zweiten Kollimatoroptik **10** (z.B. Linse oder Spiegel) werden aus den anders polarisierten, divergenten Lichtstrahlen **3f** jeweils parallele Lichtstrahlen **3g** erzeugt, die auf ein zweites drehbares Beugungsgitter **11** abgebildet werden. Die am zweiten Beugungsgitter 11 entlang einer Dispersionsrichtung **12** dispergierten Lichtstrahlen **3h** werden durch eine zweite Fokussieroptik **13** (z.B. Linse oder Spiegel) fokussiert und in einer Ausgangsbildebene jeweils auf eine Ausgangsapertur **14** zur Wellenlängenselektion abgebildet, um einen ausgewählten Spektralanteil des jeweiligen fokussierten Lichtstrahls **3i** als Lichtstrahlen **15** aus dem Monochromator 1 auszukoppeln.

Die Abstände der einzelnen Eingangsaperturen 2 senkrecht zur Dispersionsrichtung **6**, ihre Schlitzbreite, die Brennweiten von Kollimator- und Fokussieroptiken 4, 7, 10, 13 sowie die Abstände der einzelnen Komponenten des Monochromators 1 sind zueinander so gewählt, daß in der Bildebene der Aperturen 8 bzw. der Ausgangsaperturen 14 die Spektralanteile der einzelnen Lichtstrahlen räumlich vollständig voneinander getrennt sind. Die zu messenden Spektren der einzelnen Lichtstrahlen können dann ohne gegenseitige Überlagerung gemessen werden.

Im gezeigten Ausführungsbeispiel sind die beiden Beugungsgitter 5, 11 durch ein gemeinsames Beugungsgitter **16** gebildet. In weiteren nicht gezeigten Ausführungen können bei geeigneter Strahlführung auch die erste Kollimatoroptik 4 und die erste Fokussieroptik 7 und/oder die zweite Kollimatoroptik 10 und die zweite Fokussieroptik 13 durch eine gemeinsames Optik gebildet sein. Die erste Kollimatoroptik **4**, das Beugungsgitter 5 und die erste Fokussieroptik 7 und/oder die zweite Kollimatoroptik 10, das zweite Beugungsgitter 11 und die zweite Fokussieroptik 13 können ebenfalls durch ein einziges konkaves Beugungsgitter gebildet sein. Zum Durchstimmen eines definierten spektralen Bereichs ist eine Stelleinrichtung **17** zum Verdrehen des Beugungsgitters 16 vorgesehen.

In der Bildebene der Aperturen 8 bzw. vor der zweiten Kollimatoroptik 9 kann durch geeignete Umlenkung festgelegt werden, ob bei der Beugung am zweiten Beugungsgitter 11 die Spektralanteile der einzelnen Lichtstrahlen weiter aufgespaltet werden (additiver Doppelmonochromator) oder auf einen Punkt abgebildet werden (subtraktiver Doppelmonochromator).

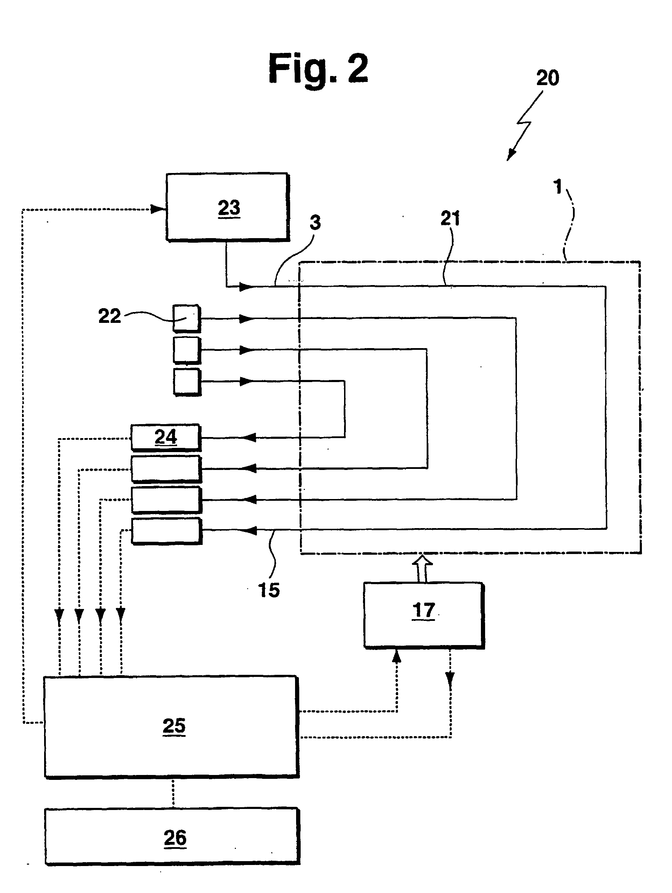

Der in **Fig. 2** insgesamt mit **20** bezeichnete optische Spektrumanalysator umfaßt den in Fig. 1 gezeigten Monochromator 1 mit vier Meßpfaden **21**, drei optische Eingänge **22** und eine Referenzlichtquelle **23**, die jeweils an einen Meßpfad 21 angeschlossen sind, vier Photodetektoren **24** sowie eine zentrale Auswerte- und Steuereinrichtung **25**. Elektrische Leitungen sind gepunktet dargestellt. Die optischen Eingänge 22 und die Referenzlichtquelle 23 sind an den Monochromator 1 über Lichtleiter angeschlossen, deren parallel zueinander ausgerichtete Austrittsflächen die Eingangsaperturen 2 bilden. Jeder aus dem Monochromator 1 ausgekoppelte Lichtstrahl 15 gelangt jeweils auf einen der Photodetektoren 24. Dort wird das optische Signal in ein elektrisches Signal umgewandelt und dieses dann digitalisiert der zentralen Auswerte- und Steuereinrichtung 25 zugeführt, die sowohl aus den elektrischen Signalen der Photodetektoren 24 die Spektren ermittelt als auch die Stelleinrichtung 17 zum Bewegen des Beugungsgitters 16 steuert. Die Auswerte- und Steuereinrichtung 25 legt aus Kalibrierdaten, die in einem Speicher **26** abgelegt sind, aus der Position des Beugungsgitters 16 und aus den während der Messung ermittelten Daten des Referenzspektrums die korrekten Wellenlängen der einzelnen Meßpunkte der einzelnen gemessenen Spektren fest. Auch die Wellenlängenskalen der einzelnen Meßpfade 21 werden von der Auswerte- und Steuereinrichtung 25 anhand der Stellung des Beugungsgitters 16, der gespeicherten Kalibrierdaten und des gemessenen Referenzspektrums bestimmt.

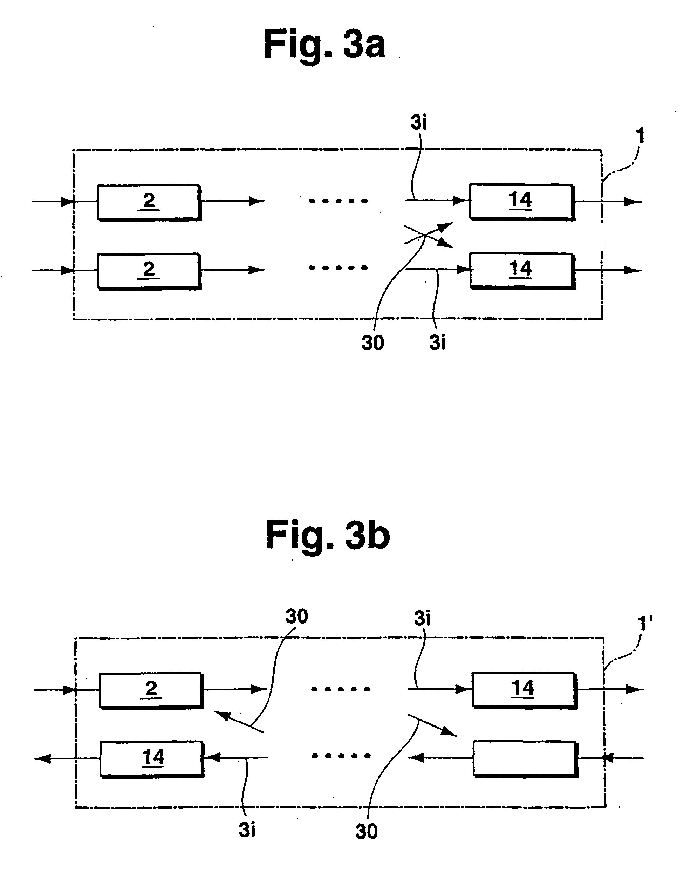

**Fig. 3a** zeigt schematisch die parallele Strahlführung von Lichtstrahlen zweier benachbarter Meßpfade durch den Doppelmonochromator 1. Aufgrund von Streulicht und Fehlern im Lichtpfad kann ein Übersprechen zwischen den beiden Meßpfaden stattfinden, indem z.B. jeweils ein Teil der fokussierten Lichtstrahlen 3i als Streulicht **30** in den jeweils anderen Meßpfad eingekoppelt wird und dort zu Meßverfälschungen führt.

**Fig. 3b** zeigt schematisch einen Doppelmonochromator **1'**, bei dem die Lichtstrahlen zweier benachbarter Meßpfade antiparallel zueinander durch den Doppelmonochromator 1' geführt sind. Dazu ist neben der Eingangsapertur 2 des einen Meßpfads des Doppelmonochromators 1' die Ausgangsapertur 14 des benachbarten anderen Meßpfads angeordnet. Durch diese antiparallele Strahlführung wird das Streulicht 30 jeweils in entgegengesetzter Richtung eingekoppelt, so daß das optische Übersprechen signifikant reduziert ist.

## Patentansprüche

1. Monochromator (1; 1') mit mehreren Eingangsaperturen (2) zum Einkoppeln mehrerer Lichtstrahlen (3), mit einer Kollimatoroptik (4) zur Erzeugung paralleler Lichtstrahlen (3b) aus den von den Eingangsaperturen (2) ausgehenden divergenten Lichtstrahlen (3a), mit einer Dispersionseinrichtung (5), vorzugsweise Beugungsgitter, zum Dispergieren der auftreffenden parallelen Lichtstrahlen (3b) entlang einer Dispersionsrichtung (6) und mit einer Fokussieroptik (7) zum Fokussieren der dispergierten Lichtstrahlen (3c), wobei die Eingangsaperturen (2) senkrecht zur Dispersionsrichtung (6) der Lichtstrahlen zueinander versetzt sind und die eingekoppelten Lichtstrahlen (3) unabhängig voneinander den Monochromator (1; 1') durchlaufen,
**dadurch gekennzeichnet,**
**dass** mehrere Aperturen (8) zur Wellenlängenselektion senkrecht zur Dispersionsrichtung (6) der Lichtstrahlen zueinander versetzt sind,
**dass** jeder durch eine Eingangsapertur (2) eingekoppelte Lichtstrahl (3) durch genau eine Apertur (8) zur Wellenlängenselektion geht und
**dass** die Lichtstrahlen zweier benachbarter Meßpfade den Monochromator (1') antiparallel zueinander durchlaufen.

2. Monochromator nach Anspruch 1, **dadurch gekennzeichnet, daß** die Aperturen zur Wellenlängenselektion die Ausgangsaperturen des Monochromators sind, aus denen das Licht aus dem Monochromator austritt.

3. Monochromator nach Anspruch 1, **dadurch gekennzeichnet, daß** für das aus den Aperturen (8) zur Wellenlängenselektion austretende Licht (3e) eine zweite Kollimatoroptik (10), eine zweite Dispersionseinrichtung (11), vorzugsweise Beugungsgitter, eine zweite Fokussieroptik (13) und mehrere Ausgangsaperturen (14) vorgesehen sind, wobei die Eingangs- und Ausgangsaperturen (2, 14) senkrecht zur Dispersionsrichtung (6, 12) der Lichtstrahlen zueinander versetzt sind, jeder durch eine Eingangsapertur (2) eingekoppelte Lichtstrahl (3) durch genau eine Ausgangsapertur (14) geht und die eingekoppelten Lichtstrahlen (3) unabhängig voneinander den Monochromator (1; 1') durchlaufen.

4. Monochromator nach Anspruch 3, **dadurch gekennzeichnet, daß** die Dispersionsrichtungen der an der ersten und an der zweiten Dispersionseinrichtungen (5, 11) dispergierten Lichtstrahlen (3c, 3h) einander entgegengesetzt sind.

5. Monochromator nach Anspruch 3, **dadurch gekennzeichnet, daß** die Dispersionsrichtungen der an der ersten und an der zweiten Dispersionseinrichtungen (5, 11) dispergierten Lichtstrahlen (3c, 3h) gleichgerichtet sind (additiver Doppelmonochromator).

6. Monochromator nach einem der Ansprüche 3 bis 5, **dadurch gekennzeichnet, daß** die beiden Dispersionseinrichtungen (5, 11) durch eine einzige Dispersionseinrichtung (16) gebildet sind.

7. Monochromator nach einem der Ansprüche 3 bis 6, **dadurch gekennzeichnet, daß** die erste und zweite Kollimatoroptik (4, 10) durch eine einzige Optik und/oder die erste und zweite Fokussieroptik (7, 13) durch eine einzige Fokussieroptik gebildet sind.

8. Monochromator nach einem der Ansprüche 3 bis 7, **gekennzeichnet durch** eine zwischen den beiden Dispersionseinrichtungen (5, 11) vorgesehene Einrichtung (9), die die Polarisation des Lichts ändert.

9. Monochromator nach einem der vorhergehenden Ansprüche, **dadurch gekennzeichnet, daß** die erste Kollimatoroptik (4) und die erste Fokussieroptik (7) und/oder die zweite Kollimatoroptik (10) und die zweite Fokussieroptik (13) durch eine einzige Optik gebildet sind.

10. Monochromator nach einem der vorhergehenden Ansprüche, **dadurch gekennzeichnet, daß** die erste Kollimatoroptik (4), die erste Dispersionseinrichtung (5) und die erste Fokussieroptik (7) und/oder die zweite Kollimatoroptik (10), die zweite Dispersionseinrichtung (11) und die zweite Fokussieroptik (13) durch ein einziges konkaves Beugungsgitter gebildet sind.

11. Monochromator nach einem der vorhergehenden Ansprüche, **dadurch gekennzeichnet, daß** neben jeder Eingangsapertur (2) des Monochromators (1) jeweils die zugeordnete Ausgangsapertur angeordnet ist.

12. Monochromator nach einem der vorhergehenden Ansprüche, **gekennzeichnet durch** eine Stelleinrichtung (17), die die Dispersionseinrichtung bzw. Dispersionseinrichtungen (5, 11, 16) zum Scannen eines definierten spektralen Bereichs verstellt.

13. Optischer Spektrumanalysator (20) mit mehreren parallelen Meßpfaden (21) und mit einem Monochromator (1; 1') nach einem der vorhergehenden Ansprüche, wobei jedem Meßpfad (21) jeweils eine Eingangs- und Ausgangsapertur (2; 14) des Monochromators (1; 1') zugeordnet ist.

14. Optischer Spektrumanalysator nach 13, **dadurch gekennzeichnet, daß** an jeder Eingangsapertur (2) ein Lichtwellenleiter angeschlossen ist und jeder Ausgangsapertur (14) ein Photodetektor (24) des optischen Spektrumanalysators (20) zugeordnet ist.

15. Optischer Spektrumanalysator nach Anspruch 13 oder 14, **dadurch gekennzeichnet, daß** mindestens ein Meßpfad (21) an eine Referenzlichtquelle (23) angeschlossen ist.

16. Optischer Spektrumanalysator nach einem der Ansprüche 13 bis 15, **gekennzeichnet durch** eine Auswerte- und Steuereinrichtung (25), die eine Stelleinrichtung (17) zum Verstellen der Dispersionseinrichtung bzw. Dispersionseinrichtungen (5, 11, 16) ansteuert und aus den elektrischen Signalen der Photodetektoren (24) die zu messenden Spektren ermittelt.

## Claims

1. Monochromator (1; 1') with several input apertures (2) for coupling several light beams (3), with a collimator optics (4) for generating parallel light beams (3b) from the divergent light beams (3a) coming from the input apertures (2), with a dispersion means (5), preferably diffraction grating, for dispersing the impinging parallel light beams (3b) along a dispersion direction (6) and with a focussing optics (7) for focussing the dispersed light beams (3c), wherein the input apertures (2) are mutually offset perpendicularly to the dispersion direction (6) of the light beams and the coupled light beams (3) pass through the monochromator (1; 1') independently of each other, **characterized in that** several apertures (8) for wavelength selection are offset from each other perpendicularly to the dispersion direction (6) of the light beams, wherein each light beam (3) which is coupled through an input aperture (2) passes through exactly one aperture (8) for wavelength selection and wherein the light beams of two neighboring measuring paths pass through the monochromator (1') in an antiparallel fashion.

2. Monochromator according to claim 1, **characterized in that** the apertures for wavelength selection are the output apertures of the monochromator from which the light exits the monochromator.

3. Monochromator according to claim 1, **characterized in that** a second collimator optics (10), a second dispersion means (11), preferably diffraction grating, a second focussing optics (13) and several output apertures (14) are provided for the light (3e) exiting the apertures (8) for wavelength selection, wherein the input and output apertures (2, 14) are offset from each other perpendicularly to the dispersion direction (6, 12) of the light beams, each light beam (3) which is coupled through an input aperture (2) passes through exactly one output aperture (14) and the coupled light beams (3) pass through the monochromator (1; 1') independently of each other.

4. Monochromator according to claim 3, **characterized in that** the dispersion directions of the light beams (3c, 3h) which are dispersed on the first and second dispersion means (5, 11) are opposite to each other.

5. Monochromator according to claim 3, **characterized in that** the dispersion directions of the light beams (3c, 3h) which are dispersed on the first and second dispersion means (5, 11) are rectified (additive double monochromator).

6. Monochromator according to any one of the claims 3 through 5, **characterized in that** the two dispersion means (5, 11) are formed by one single dispersion means (16).

7. Monochromator according to any one of the claims 3 to 6, **characterized in that** the first and second collimator optics (4, 10) are formed by one single optics and/or the first and second focussing optics (7, 13) are formed through one single focussing optics.

8. Monochromator according to any one of the claims 3 through 7, **characterized by** a means (9) which is provided between the two dispersion means (5, 11) and changes the polarization of the light.

9. Monochromator according to any one of the preceding claims, **characterized in that** the first collimator optics (4) and the first focussing optics (7) and/or the second collimator optics (10) and the second focussing optics (13) are formed by one single optics.

10. Monochromator according to any one of the preceding claims, **characterized in that** the first collimator optics (4), the first dispersion means (5) and the first focussing optics (7) and/or the second collimator optics (10), the second dispersion means (11) and the second focussing optics (13) are formed by one single concave diffraction grating.

11. Monochromator according to any one of the preceding claims, **characterized in that** the associated output aperture is disposed next to each input aperture (2) of the monochromator (1).

12. Monochromator according to any one of the preceding claims, **characterized by** an adjustment means (17) which adjusts the dispersion means (5, 11, 16) for scanning a defined spectral range.

13. Optical spectrum analyzer (20) with several parallel measuring paths (21) and one monochromator (1; 1') according to any one of the preceding claims, wherein each measuring path (21) is associated with one input and output aperture (2; 14) of the monochromator (1; 1').

14. Optical spectrum analyzer according to claim 13, **characterized in that** a light wave guide is connected to each input aperture (2) and each output aperture (14) is associated with a photo detector (24) of the optical spectrum analyzer (20).

15. Optical spectrum analyzer according to claim 13 or 14, **characterized in that** at least one measuring path (21) is connected to a reference light source (23).

16. Optical spectrum analyzer according to any one of the claims 13 through 15, **characterized by** an evaluation and control means (25) which controls an adjustment means (17) for adjusting the dispersion means (5, 11, 16) and determines the spectra to be measured from the electrical signals of the photo detectors (24).

## Revendications

1. Monochromateur (1; 1') comportant plusieurs ouvertures d'entrée (2) pour l'injection de plusieurs faisceaux de lumière (3), comportant un système optique formant collimateur (4) pour produire des faisceaux de lumière parallèles (3b) à partir des faisceaux de lumière divergents (3a) qui arrivent des ouvertures d'entrée (2), un dispositif de dispersion (5), de préférence un réseau de diffraction, pour disperser les faisceaux de lumière parallèles incidents (3b) le long d'une direction de dispersion (6), et un système optique de focalisation (7) pour focaliser les faisceaux de lumière dispersés (3c), les ouvertures d'entrée (2) traversant en étant décalées les unes par rapport aux autres perpendiculairement à la direction de dispersion (6) des faisceaux de lumière, et les faisceaux de lumière injectés (3) traversant le monochromateur (1; 1') d'une manière indépendante les uns des autres,
**caractérisé en ce**
**que** plusieurs ouvertures (8) pour la sélection de longueurs d'onde sont décalées les unes par rapport aux autres perpendiculairement à la direction de dispersion (6) des faisceaux de lumière, et
**que** chaque faisceau de lumière (3) injecté dans une ouverture d'entrée (2) traverse précisément une ouverture (8) pour la sélection des longueurs d'onde; et
**que** les faisceaux de lumière de deux voies de mesure voisines traversent le monochromateur (1) d'une manière antiparallèle l'un par rapport à l'autre.

2. Monochromateur selon la revendication 1, **caractérisé en ce que** les ouvertures pour la sélection des longueurs d'onde sont les ouvertures de sortie du monochromateur, d'où la lumière qui le monochromateur.

3. Monochromateur selon la revendication 1, **caractérisé en ce que** pour la lumière (3c) qui sort des ouvertures (8) pour la sélection des longueurs d'onde, il est prévu un système optique formant collimateur (10), un second dispositif de dispersion (11), de préférence un réseau de diffraction, un troisième système optique de focalisation (13) et plusieurs ouvertures de sortie (14), les ouvertures d'entrée et de sortie (2, 14) étant décalées les unes par rapport aux autres perpendiculairement à la direction de dispersion (6, 12) des faisceaux de lumière, chaque faisceau de lumière (3) injecté par une ouverture d'entrée (2) traverse de façon précise une ouverture de sortie (14), et les faisceaux de lumière injectés (3) traversent le monochromateur (1; 1') d'une manière indépendante les uns des autres.

4. Monochromateur selon la revendication 3, **caractérisé en ce que** les directions de dispersion des faisceaux de lumière (3c, 3h) dispersés sur les premier et second dispositifs de dispersion (5, 11) sont décalées en des sens réciproquement opposés.

5. Monochromateur selon la revendication 3, **caractérisé en ce que** les dispositifs de dispersion des faisceaux de lumière (3c, 3h) dispersés au niveau des premier et second dispositif de dispersion (5, 11) sont redressés (monochromateur double additif).

6. Monochromateur selon l'une des revendications 3 à 5, **caractérisé en ce que** les deux directions de dispersion (5, 11) sont formées par un seul dispositif de dispersion (16).

7. Monochromateur selon l'une des revendications 3 à 6, **caractérisé en ce que** les premier et second systèmes optiques formant collimateurs (4, 10) sont formés par un seul système optique et/ou les premier et second systèmes optiques de focalisation (7, 13) sont formés au moyen d'un système optique individuel de focalisation.

8. Monochromateur selon l'une des revendications 3 à 7, **caractérisé par** un dispositif (9) qui est prévu entre les deux dispositifs de dispersion (5, 11) et modifie la polarisation de la lumière.

9. Monochromateur selon l'une des revendications précédentes, **caractérisé en ce que** le premier système optique formant collimateur (4) et le premier système optique de focalisation (7) et/ou le second système optique formant collimateur (10) et le second système optique de focalisation (13) sont formés par un seul système optique.

10. Monochromateur selon l'une des revendications précédentes, **caractérisé en ce que** le premier système optique formant collimateur (4), le premier dispositif de dispersion (5) et le premier système optique de focalisation (7) et/ou le second système optique formant collimateur (10), le second dispositif de dispersion (11) et le second système optique de focalisation (13) sont formés par un seul réseau de diffraction concave.

11. Monochromateur selon l'une des revendications précédentes, **caractérisé en ce que** respectivement l'ouverture de sortie associée est disposée à côté de chaque ouverture d'entrée (2) du monochromateur (1).

12. Monochromateur selon l'une des revendications précédentes, **caractérisé par** un dispositif de réglage (17), qui règle le ou les dispositifs de dispersion (5, 11, 16) pour réaliser le scannage d'une plage spectrale définie.

13. Analyseur de spectre optique (20) comportant plusieurs voies de mesure parallèles (21) et un monochromateur (1; 1') selon l'une des revendications précédentes, dans lequel à chaque voie de mesure (21) est associée respectivement une ouverture d'entrée et de sortie (2; 14) du monochromateur (1; 1').

14. Analyseur de spectre optique selon la revendication 13, **caractérisé en ce qu'**un guide d'ondes lumineuses est raccordé à chaque ouverture d'entrée (2) et qu'un photodétecteur (24) de l'analyseur de spectre optique (20) est associé à chaque ouverture de sortie (14).

15. Analyseur de spectre optique selon la revendication 13 ou 14, **caractérisé en ce qu'**au moins une voie de mesure (21) est raccordée à une source de lumière de référence (23).

16. Analyseur de spectre optique selon l'une des revendications 13 à 15, **caractérisé par** un dispositif d'évaluation et de commande (25), qui commande un dispositif de réglage (17) pour régler le ou les dispositifs de dispersion (5, 11, 16) et déterminer, à partir des signaux électriques des photodétecteurs (24), les spectres à mesurer.
